# EUROPEAN PATENT SPECIFICATION

(11) **EP 3 065 528 B1**
(45) Date of publication and mention of the grant of the patent: **11.06.2025**
(21) Application number: 14860069.5
(22) Date of filing: 06.11.2014
(51) Int. Cl.: A01C 7/04, A01C 19/02

(54) **AGRICULTURAL IMPLEMENT AND METHOD FOR SINGULATING GRANULES**
LANDWIRTSCHAFTLICHES ARBEITSGERÄT UND VERFAHREN ZUM VEREINZELN VON GRANULAT
OUTIL AGRICOLE ET PROCÉDÉ POUR SÉPARATION INDIVIDUELLE DE GRANULÉS

(30) Priority: 07.11.2013 SE 1351317
(43) Date of publication of application: 14.09.2016
(73) Proprietor: Väderstad Holding AB, 590 21 Väderstad (SE)
(72) Inventor: FRANSSON, Jörgen, S-590 21 Väderstad (SE); STARK, Crister, S-590 21 Väderstad (SE)
(74) Representative: AWA Sweden AB
(86) International application number: PCT/SE2014/051318
(87) International publication number: WO 2015/069179

(56) References cited:
- CN-A- 101 810 075
- FR-A- 1 194 527
- US-A- 126 250
- US-A- 458 096
- US-A- 930 831
- US-A1- 2010 043 685
- US-A1- 2010 043 685

## Description

### Technical field

This document relates to an agricultural implement comprising a singulating device and to a method of feeding out granules.

### Background

In sowing by means of a seed drill, it is desirable to achieve optimal distribution of seed: the greatest possible use must be made of available acreage, but the crop must not be planted too densely, since the yield can then be impaired.

In a common type of seed drills, distribution of seed is realized in a distributor connected to a seed box. The distributor can either be connected directly to the lower portion of the seed box or via a pipe leading to a distributor head, wherein the distributed seed, by means of an air stream, is led in pipes or tubes to the respective coulter.

This type of distributor is generally set to feed out a certain quantity (expressed in weight) of granules per unit of area. It has been found that when the granules are distributed with known distributors, a distribution which is acceptable, given the cost and complexity of the equipment used, is achieved.

Some singulating devices are known from US2010043685A1, CN 101 810 075 A and FR 1 194 527 A.

It is nevertheless desirable to further improve the precision in the feeding of seed and other granular material, so that the distribution of the seed is as close to optimal as possible. This in order that optimization of the seed quantity per unit of area increases the potential of each plant to produce a high yield as a result of gaining optimal access to water, space, light and nutrient.

Ways of producing such an improvement in precision are shown in SE520798C2 and SE524649C2. Yet there remains a need for a device which has the capacity to improve the precision in the feeding of seed and which is robust, flexible and not far too expensive to produce. In addition, it would be desirable for the produced device to be easily integratable with existing machine designs and, ideally, also retrofittable to older machines.

### Summary

One object is therefore to provide a singulating device and a singulating method which can be utilized to improve the precision in the sowing or distribution of granular material.

The invention is defined by the appended independent patent claims, and embodiments emerge from the dependent patent claims, the following description and the appended drawings.

According to a first aspect, there is provided an agricultural implement, as defined in claim 1. The agricultural implement comprises singulating devices for singulating granules, such as seed, fertilizer or herbicide. The singulating devices comprise a singulating disk, which has a plurality of through holes. The holes are tailored in terms of shape and size to receive individual granules, and the shape and size of the holes are such that the granules can only pass one at a time through each hole.

The quantity of seed which can pass through the singulating device is thereby limited.

The shape and size of the holes can be such that the granules are releasably detained therein.

The holes can be arranged along a circumferential direction of the singulating disk.

The holes can be arranged in at least two rows along the circumferential direction of the singulating disk.

The holes can be substantially uniform and can have a greater length in the circumferential direction than a material portion, lying between the holes, of the singulating disk.

The holes can have a cross-sectional area which increases in the material direction of flow.

With increasing cross-sectional area, a taper angle can be produced, which reduces the risk of granules or waste getting stuck in the holes.

The disk can have at least one hole with larger cross-sectional area than the other holes, wherein said cross-sectional area can preferably be 120-350% of the cross-sectional area of the other holes, preferably 150-300% larger or about 200-250% larger.

By providing the singulating disk with one or more such holes of larger cross-sectional area, this can also let through granules which are too large for the other holes, wherein the risk of the singulating device being filled up with overlarge granules is reduced.

A number of holes with larger cross-sectional area can be less than 5 % of the total number of holes of the disk, preferably less than 3 % or less than 1 %.

The singulating disk can have material portions situated between the holes, which material portions have protrusions which stop granules from remaining between the holes.

The singulating devices can comprise orientation means for ensuring correct mounting of the singulating disk in the device.

Such an orientation member can comprise a depression and a protrusion fitting in the depression, of which one is arranged in the singulating disk and the other is arranged on a drive hub.

The singulating disks can be flexible, so that this, during operation, can be bowed in a direction substantially perpendicular to the disk in order to facilitate passage or release of granules received in the holes.

The singulating disks can be flexible substantially in a direction parallel with the singulating disk in order to facilitate passage or release of granules received in the holes.

The singulating devices comprise a housing, in which the singulating disk is disposed.

The housings comprise an inlet for granule-bearing air and an outlet for granule-bearing air.

The inlet and the outlet can be situated on opposite sides of the singulating disk and substantially aligned with each other.

The inlet and the outlet can be displaced in relation to each other at an angle amounting to 1° - 45°, viewed from the center of the singulating disk.

The outlet can have a portion having a center line which extends parallel with a motion vector of the granules when these leave the singulating disk.

By "center line" is meant a line running through the centers of gravity of all the flow cross sections of the portion.

As a result of a thus oriented outlet, the risk of fed-out granules bouncing on the walls of the outlet in such a way that the feed is disturbed, and thus the precision is impaired, diminishes.

The length of the portion can be less than the radius of the singulating disk, preferably less than 2/3 or less than ½ of the radius of the singulating disk.

The center line can have an angle which is less than 90° relative to the plane of the singulating disk.

The projection of the center line onto the singulating disk has a first component, greater than zero, which extends radially outward from the center of the singulating disk, and/or a second component, greater than zero, which extends parallel with the tangent of the singulating disk at a point where the granules leave the singulating disk.

The housing can comprise a detachable side wall, which in the radial direction delimits a singulating space. The side wall can be detachable to allow cleaning of the singulating space and/or to allow exchange of a singulating disk.

The singulating devices can further comprise a wall portion which supports the inlet such that the position of the inlet relative to the singulating disk is independent of whether the side wall is detached or not. It is thereby possible to detach the side wall without needing to disconnect tubes or pipes which are connected to the inlet.

The singulating devices can further comprise a subframe, which is spring-mounted relative to the housing and which supports at least one scraper arranged to stop granules which are not received in holes from reaching the outlet.

The singulating devices can comprise a granule bypass duct, set up to produce a granule-laden air flow directly from the inlet to the outlet, and thus to wholly or partially bypass the singulating device.

The housing can have a base portion, wherein the singulating disk can be placed sufficiently close to the base portion for the holes of the disk, together with the base portion, to form bottom holes.

The base portion can have a circumferentially running gap, which radially coincides with at least some of the holes such that air, but not granules, can pass through said bottom holes.

Improved securement of the granules in the holes is thereby achieved by pressing or suction of the granules firmly into the holes.

The singulating disks can have at least one protrusion, which juts down into the gap. A self-cleaning effect can thereby be achieved.

The singulating devices can comprise an air-collecting housing, which can be configured to collect air which passes through the holes in the singulating disk, and through any gaps in a base portion of the housing.

The air-collecting housing can be configured to conduct collected air to the outlet or to a separate duct which opens out closer to the ground than the outlet.

For example, the collected air can be conducted to a duct integrated with a share, so that outgoing air is conducted through the share down into the ground and thereby helps to convey granules exiting the singulating device. Alternatively, the collected air can be conducted into a separate duct which opens out closer to the ground than the singulating device.

The singulating devices can comprise an air bypass duct, set up to produce only one air flow directly from the inlet to the outlet, and thus to partially bypass the singulating device.

Some of the air can thereby be conducted past the singulating device, which bypassing can be utilized to reduce the turbulence in the singulating device.

The singulating devices can comprise a pressure member set up to press the granules through the holes.

Such a pressure member can be especially advantageous when the singulating disk is configured to detachably secure the granules.

The pressure member can comprise an arm pretensioned against the singulating disk.

The pressure member can comprise protrusions, configured to be at least partially received in the singulating disk holes.

The protrusions can have the form of ridges, bristles or spikes.

Said pressure member can have a contact portion, for bearing against the singulating disk, which contact portion is sufficiently flexible to be pressed into the holes of the disk.

Said pressure member can comprise a wheel, the periphery of which bears against or engages with the singulating disk holes.

Alternatively, said pressure member can be movable, for example rotatable, relative to a subframe.

The wheel can have protrusions or ridges, which engage with the holes of the disk. Alternatively, the periphery of the wheel can be provided with a flexible contact portion. It will also be appreciated that a wheel can be pretensioned against the disk other than by means of an arm, for example by the axle of the wheel being pretensioned movably in the direction substantially perpendicular to the disk.

The singulating devices can comprise a drive unit, arranged to directly or indirectly set the singulating disk in motion.

The drive unit can be arranged to make the singulating disk rotate.

Alternatively, the drive unit can be arranged to make a drive wheel rotate, and the drive wheel can be arranged to engage with the singulating disk and thereby make it rotate.

The drive wheel can be integrated with a pressure member.

For example, the drive wheel can be provided with a plurality of cogs, which engage with corresponding cogs disposed on the disk. Alternatively, the drive can be produced by rotation of a pressure wheel, which can be provided with protrusions, and, through engagement of the protrusions with the disk, by rotation of this same.

The drive unit can comprise a motor, which can be axially retracted against or through the singulating disk.

A more compact singulating device can thereby be produced.

The singulating devices can comprise an agitation member, configured to produce a shaking motion between the singulating disk and the granules.

The distribution of granules over the singulating disk can thereby be improved.

The agitation member can comprise a control device, which is configured or programmed to produce pulsed driving of the singulating disk.

Alternatively or complementary thereto, the agitation member can comprise a weight arranged eccentrically on a shaft connected to the disk.

Alternatively or complementary thereto, the agitation member can comprise an external vibrator.

The singulating devices can comprise a spring-mounted and/or shock-absorbing suspension device for mounting of the device on an agricultural implement.

The singulating devices can comprise at least one baffle, arranged to control a distribution of the granules over the singulating disk.

A portion of the baffle, which portion is situated closest to the singulating disk, can be sufficiently flexible to let granules which jut up from holes in the singulating disk pass the baffle in the direction of rotation of the singulating disk.

The portion situated closest to the singulating disk can be formed of a rubber or rubber-like material, or of bristles.

The singulating disks can have an angle of inclination of 5°-40°, preferably 10°-35°, 15°-30° or about 20°-25°, relative to a horizontal plane.

The inlet can be situated at a lower vertical level than a center of the singulating disk.

In such a case, the inlet can be arranged within a 60°, preferably 30°, central angle from the lowest situated portion of the singulating disk.

The outlet can be situated at a lower vertical level than a center of the singulating disk and upstream of the inlet, viewed in a direction of rotation of the singulating disk.

For example, the outlet can be situated within a 90°, preferably 60° or 30 °, central angle from the lowest situated portion of the singulating disk.

Hence, according to the first aspect, there is provided an agricultural implement for feeding of granules, such as seed, fertilizer or herbicide, is provided, comprising a container for said granules, a share for feeding out said granules to the ground, and singulating devices as described above, arranged to receive a first flow of granules from the container and to feed out a second flow of granules to the share.

The agricultural implement comprises a primary distributor connected to the container and set up to feed said granules from the container in order to produce the first flow of granules.

The primary distributor is arranged to feed said granules to at least two shares, and the agricultural implement can comprise at least two singulating devices connected to a respective share.

The agricultural implement comprises flow-generating means for producing an air flow for driving at least the first flow of granules.

Alternatively or complementary thereto, the container can be situated higher up than the singulating device, such that the first flow of granules is produced substantially by means of gravity.

According to a second aspect, a method of singulating granules, such as seed, fertilizer or herbicide, in an agricultural implement is provided. The method comprises the granules, in a singulating device, being made to pass one at a time through each through hole in a singulating disk.

The method can comprise shifting the singulating disk and only allowing a granule to pass through a respective hole when the singulating disk, and thus the hole, are at a predetermined position.

The method comprises providing said granules in a container, producing a first flow of granules from the container to the singulating device, and, from the singulating device, feeding a second flow of granules to a share for feeding out said granules to the ground.

The method comprises producing the first flow of granules by means of a primary distributor connected to the container.

The method can comprise the second flow, from the point of the material leaving the singulating disk and over a distance corresponding to the radius of the singulating disk, preferably ½ the radius of the singulating disk, being conducted substantially parallel with outlet walls, such that the material is prevented from bouncing against the outlet walls.

The method comprises producing at least two first flows of granules, each one of at least two singulating devices receiving one of said first flows of granules, producing in a respective singulating device a respective second flow of granules, which is more even than the first flow, and, from the respective singulating device, feeding the granules to a respective share.

The method comprises producing an air flow for driving at least said first flow of granules.

As an alternative or supplementary thereto, the method can comprise producing the first flow of granules substantially by means of gravity.

In the method, the singulating disk is made to rotate relative to a housing of the singulating device.

The singulating disk can be made to rotate in a plane which is angled by 5°-40°, preferably 10°-35° or 20°-25°, relative to a horizontal plane (H).

The material can initially be fed to a portion of the singulating disk which is situated at a lower vertical level than a center of the singulating disk.

Material which has not been received in said holes can be returned to said portion.

The method can comprise rotating the singulating disk at a rotation speed which is related to a speed of advance of the agricultural implement.

The method can comprise rotating the singulating disk sufficiently close to a base portion of a housing such that the holes, together with the bottom part, form bottom holes, each one of which is configured to receive a granule.

The method can comprise, at an outlet portion from the singulating device, preventing granules which have not been received in a bottom hole from being transported with the singulating disk.

It is thereby ensured that only a certain quantity of granules travels along to the outlet.

The method can comprise controlling granules which have been transported by the singulating disk and have not been received in a bottom hole such that these are shifted at least radially relative to the singulating disk.

Distribution of the granules over the singulating disk is thereby facilitated, which helps to produce an even outflow of granules.

The method can comprise applying a force, substantially in a direction of feed, to granules received in the holes of the singulating disk, such that these are released from the singulating disk to form the second flow.

The method can comprise bending the singulating disk in a direction substantially perpendicular thereto in order to release granules received in the holes of the singulating disk.

In the method, air contained in the first flow can be allowed to pass through the singulating disk in order to be incorporated in the second flow.

The method can comprise, by means of a pick-up sensor, detecting that the motion of the singulating disk is prevented, stopping the driving of the singulating disk, driving the singulating disk in a reverse direction at at least 70 % of available power, preferably at least 80 %, at least 90 %, at least 95 %, or substantially 100 % of available power; and driving the singulating disk forward at at least 70 % of available power, preferably at least 80 %, at least 90 %, at least 95 %, or substantially 100 % of available power.

The described method for forward/reverse operation can be utilized to achieve a self-cleaning effect also on other types of singulating devices.

The method can comprise repeating, at least twice, the steps of detecting, stopping the driving, driving the singulating disk in a reverse direction, again stopping the driving, and driving the singulating disk forward; and only subsequently providing an indication to a user that a fault is present .

The method can comprise detecting a level of granules in a singulating space in the singulating device. Here, the method can also comprise controlling a motion of the singulating disk on the basis of the level, controlling a feed rate of granules to the singulating device on the basis of the level, and/or providing a level status indication on the basis of the level.

The level status indication can be utilized as an alarm signal to a user to indicate, for example, that a fault is present or that the speed of advance is too high.

The method can comprise registering granules fed out from the singulating device. Here the method can also comprise controlling a motion of the singulating disk on the basis of the registration, controlling a feed rate of granules to the singulating device on the basis of the registration, and/or providing a feed-out status indication on the basis of the registration.

A feed-out status indication can be utilized to indicate for a user whether a right or wrong quantity of seed is produced.

### Brief description of the drawings

Fig. 1a shows a seed drill, which can be supplemented with a singulating device, as illustrated herein, in order to produce improved feed-out precision.
Fig. 1b shows a seed drill comprising singulating devices as illustrated herein.
Fig. 2 shows a perspective view of a singulating device.
Fig. 3 shows a perspective view of the singulating device in fig. 1, with a top cover removed.
Fig. 4 shows a plan view, viewed from above, of the singulating device in figs. 2 and 3, with the top cover removed.
Fig. 5 shows a plan view, viewed from below, of the singulating device in figs. 2-4.
Fig. 6 shows a side view of the singulating device in figs. 2-5.
Fig. 7 shows an exploded diagram of the singulating device in figs. 2-6.
Fig. 8a shows a perspective view of the singulating device in figs. 2-7, in which a part of the side wall has been removed in order to show a feed wheel.
Fig. 8b shows a perspective view of the feed wheel and the singulating disk in fig. 8a.
Fig. 9 shows a perspective view of a variant of the singulating device, in which a part of the side wall has been removed and in which the singulating device has been provided with a bypass unit.
Figs. 10a-10b show plan views, viewed from above, of a variant of the singulating device, in which this has been provided with material control parts.
Figs. 11a-11c show perspective views of different variants of the singulating disk.
Figs. 12a-12b show perspective views of a variant of the singulating disk.
Figs. 13a-13c show a variant of the singulating device, in which this has been provided with an air collector.
Fig. 14 shows a variant of the singulating device, in which this has been provided with an air return duct.
Fig. 15 shows a variant of the singulating device, in which this has been provided with an alternative drive mechanism.
Fig. 16 shows an operating method for singulating devices, as illustrated herein.
Figs. 17a-17b show a variant of the singulating device, in which this has been provided with a bypass duct.
Fig. 18 shows an alternative use of the singulating device, in which this is used together with a dedicated container.
Figs. 19a-19b show an alternative singulating disk and pressure device, and an adapter insert for use with the alternative singulating disk.
Figs. 20-25 show a further alternative embodiment of the singulating device 1'.
Figs. 26-28 show schematic pictures of a further alternative embodiment of the singulating device.
Fig. 29 shows an alternative embodiment of a drive mechanism.

### Detailed description

The structure and working of a singulating device 1 will be described below with reference to a singulating device 1 for singulating seed, such as wheat, rye, rape, etc. It will be appreciated that the singulating device 1 can analogously be utilized in devices for feeding out, for example, fertilizer and/or herbicide.

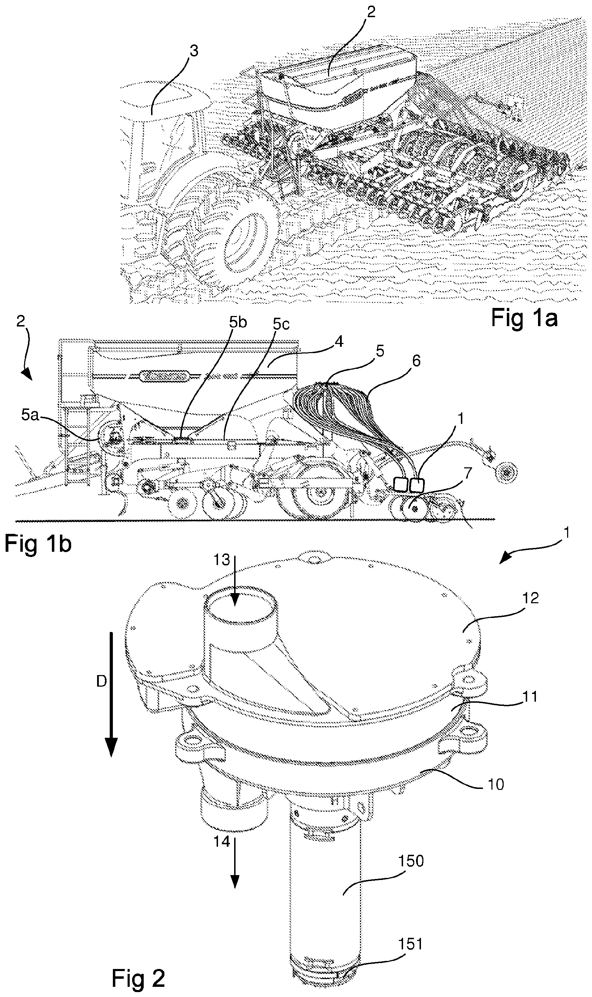

Fig. 1a shows an agricultural implement 2 in the form of a seed drill, which is configured to be pulled behind a towing vehicle 3, such as a tractor. The agricultural implement 2 comprises a seed box 4, i.e. a container for seed, a primary distributor 5, i.e. a device for distributing seed from the container to a plurality of coulters 7, a plurality of tubes 6 for conducting a seed-laden air flow from the primary distributor 5 to a respective coulter 7. The terms "coulter" and "share"" here embrace both traditional coulters and wheel-based or disk-based devices for placement of granules in the ground.

Fig. 1b shows an agricultural implement 2' having a singulating device 1 disposed between the primary distributor 5 and a respective coulter 7. The agricultural implement 2' shown in fig. 1b has a fan 5a, which produces an air flow, to which seed is fed from the seed box 4 on a feed device 5b and is subsequently transported to the primary distributor 5 via a pipe 5c.

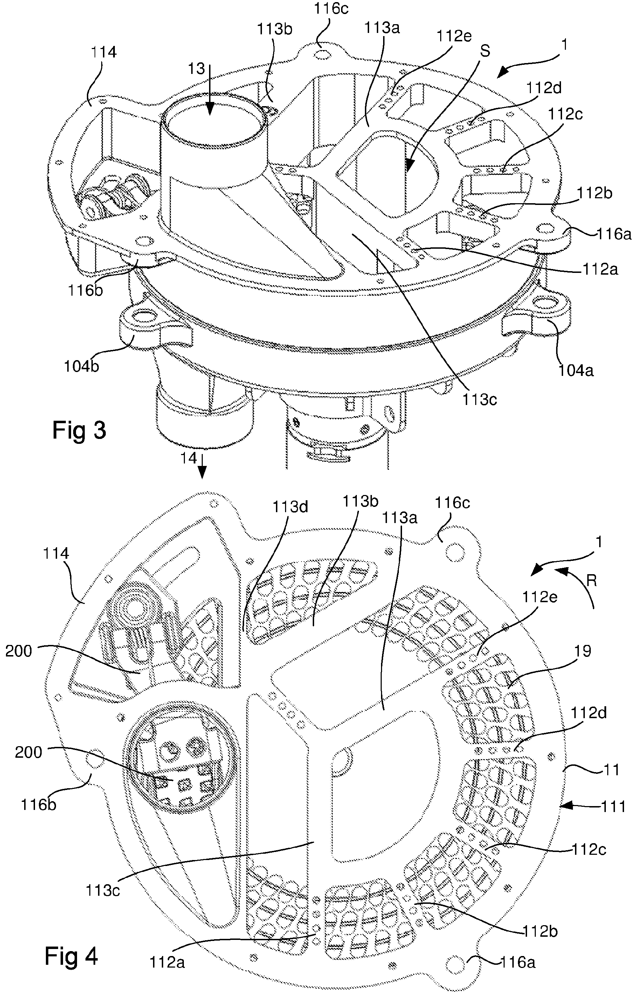

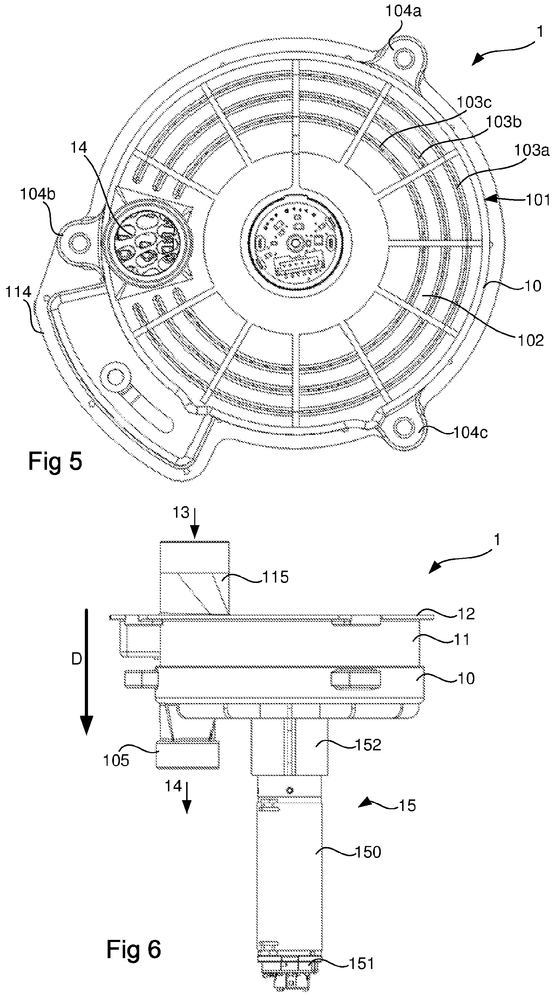

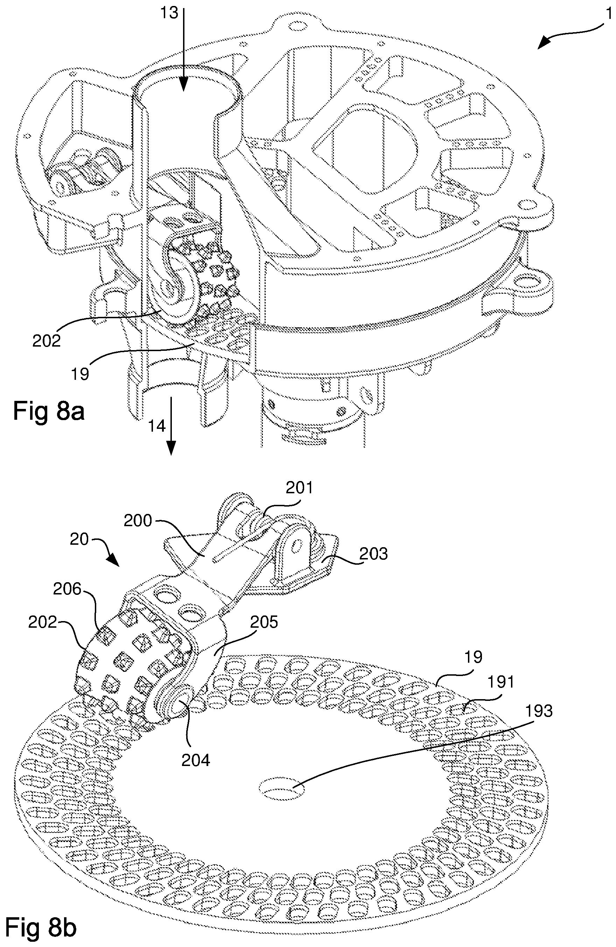

Figs. 2-8b show an embodiment of a singulating device 1, which can comprise a bottom part 10, a top part 11 and a top cover 12, which together can define a singulating space S. The singulating space S has an inlet 13, which is intended to be connected to the primary distributor 5, and an outlet 14, which is intended to be connected to the share 7.

In the singulating space S is rotatably disposed a singulating disk 19. The singulating disk 19 has a plurality of through holes 191, which can be arranged along the circumferential direction R of the singulating disk. In the shown example, the holes 191 in the singulating disk 19 are disposed in three concentric and annular rows along the circumferential direction R.

The configuration of the singulating disk with regard to hole shape, hole size and number of holes can be varied to suit the particular type of seed (or possibly other material) which is to be singulated.

In the shown embodiments, the singulating disk 19 is substantially flat and rotatable in a plane which is horizontal. It will be appreciated that the singulating disk does not have to be flat, and that it does not have to rotate in an exactly horizontal plane.

The bottom part 10 can have a generally cylindrical shape and can comprise a circumferential side wall 101 and a base 102. The side wall can have a plurality of fastening lugs 104a, 104b, 104c for fixing the singulating device 1 relative to the agricultural implement and/or for coupling two or more of the parts 10, 11, 12 which form the singulating space S. The base 102 of the bottom part 10 can further have one or more circumferential grooves 103a, 103b, 103c, which can be continuous such that they allow air to pass through the base 102. The grooves 103a, 103b, 103c can have a cross-sectional area which increases in a direction of flow D.

The singulating disk 19 can have one or more protrusions (not shown) in the form of spikes or ridges, which are arranged to jut down into the grooves 103a, 103b, 103c of the base surface of the bottom part 10 and thus help to clean these of dirt particles.

The grooves 103a, 103b, 103c can have an open end situated by the outlet 14, so that material which has stuck in the groove and has been transported by the above-described spikes or ridges can pass to the outlet 14 and is thus led away from the singulating device.

In addition, the bottom part can have an outlet portion 105, which is configured to form the outlet 14 from the singulating space S.

Two or more of side wall 101, base 102, fastening lugs 104a, 104b, 104c and outlet portion 105 can be integrated with one another, for example formed in one piece. The bottom part 10 shown in the example can be formed in one piece by injection molding of polymer material.

The top part 11 can also have a generally cylindrical shape and can comprise a circumferential side wall 111 having a plurality of beam portions 112a, 112b, 112c, 112d, 112e which extend inward from the side wall 111 and on which guide baffles 22a, 22b, 22c, 22d can be mounted, and/or a plurality of partition walls 113a, 113b, 113c, 113d, which can be utilized to divide the singulating space S into various sub-spaces.

The beam portions 112a, 112b, 112c, 112d, 112e can have an extent in the direction of flow D which is less than the extent of the top part 11 in the direction of flow D. As is shown in the example, they can be located on the uppermost part of the top part. The extent can be such that at least two, preferably 3-15 layers of seed can be accommodated between a respective beam portion 112a, 112b, 112c, 112d, 112e and a singulating disk 19 situated in the singulating space S.

In addition, each one of the beam portions 12a, 112b, 112c, 112d, 112e can be provided with one or more mounting members, such as holes or depressions, which enable baffles and/or sensors 401, for example, to be mounted inside the singulating space S.

The partition walls 113a, 113b, 113c, 113d can extend substantially all the way down to the singulating disk 19, for example with a view to ensuring that one or more parts of the singulating space S are free from, or contain a lower level of, seed.

Alternatively, one or more of the partition walls 113a, 113b, 113c, 113d can have such an extent that they allow a predetermined level of seed to pass between partition wall and singulating disk 19.

For example, a partition wall 113a, 113b, 113c can be configured to only allow seed which is located wholly or partially in holes 191 in the singulating disk 19 to pass under the partition wall.

The partition walls 113a, 113b, 113c, 113d can, but do not have to be provided with a flexible portion situated closest to the singulating disk 19, which allows seed which is located at least partially in holes 191 in the singulating disk 19 to pass under the partition wall, whilst seed which is not located in holes 191 in the singulating disk 19 will be prevented from passing the partition wall. A flexible portion of this kind can be formed of rubber or rubber-like material, of bristles, or of a thinned or hinged material portion. The partition walls can thus be integrated with, or support, one or more scrapers.

In addition, the top part 11 can have a mounting portion 114 for a pressure device 20 and an inlet portion 115 for forming the inlet 13 to the singulating space S.

The top part 11 can also be provided with a plurality of fastening lugs 116a, 116b, 116c for fixing the singulating device 1 relative to the agricultural implement and/or for coupling two or more of the parts 10, 11, 12 which form the singulating space S.

Two or more of side wall 111, beam portions 112a, 112b, 112c, 112d, 112e, 112f, 112g, partition walls 113a, 113b, 113c, 113d, mounting portion 114 and inlet portion 115 can be integrated with one another, for example formed in one piece. The top part 11 shown in the example can be formed in one piece by injection molding of polymer material.

The top cover 12 can be configured to close off the upper part of the singulating space. It will be appreciated that the top cover 12 can be integrated with, i.e. permanently connected to, or formed in one piece with, the top part 11. It can be desirable to form the top cover 12 from a material which is transparent, for example transparent plastic, so that the singulating space S can be inspected during operation.

The singulating device 1 can further comprise a drive unit 15, which can comprise a motor 150, such as an electric motor, a motor control unit 151, a transmission mechanism 152, and a drive shaft 153, via which a rotation motion R generated by the motor 150 is transmitted to the singulating disk 19.

The motor control unit 151 can be configured to drive the motor 150 in accordance with a control signal which can be received from a central control unit for the agricultural implement. Such a control signal can indicate, for example, a desired rotation speed.

In one embodiment, the motor control unit 151 can be configured to receive a drive voltage which directly corresponds to the desired rotation speed.

In another embodiment, the motor control unit 151 can be configured to receive a fixed (or alternating) drive voltage and at least one control signal (for example, via a standard bus), wherein the motor control unit 151 drives the motor 150 in accordance with the control signal.

The drive unit 15 can be configured to detect malfunctions, for example by monitoring of drive current, and to produce a fault signal to the central control unit when a fault state is detected.

As a further alternative, the drive unit 15 can be configured to execute one or more predetermined measures when a fault state is detected, but before a fault signal is generated.

The drive unit 15 can be connected to a drive hub 23, which can wholly or partially be located inside the singulating space S and which can be tailored to receive the singulating disk 19.

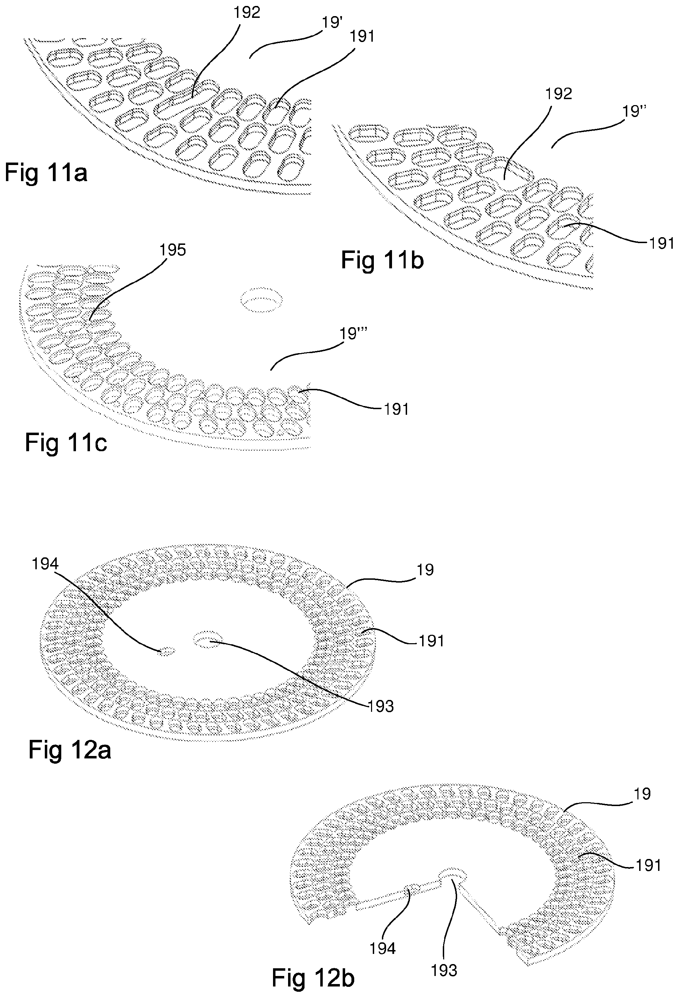

The drive hub 23 can have a base part 230, which constitutes a vertical support for the singulating disk 19, and a shaft 231, which constitutes a support in horizontal directions for the singulating disk through engagement of the shaft 231 in a center hole 193 of the singulating disk 19. In addition, the drive hub 23 can have a guide pin 232, which is configured to engage with a guide socket 194 of the singulating disk 19 (figs. 12a, 12b) in order to prevent incorrect mounting of the singulating disk 19.

The singulating device 1 can further comprise a pressure device 20, which can help to, given a correct rotation position for the singulating disk 19, i.e. at the outlet 14, press seed received in the holes in the singulating disk 19 out through the back of the singulating disk, and thus to the outlet 14.

The pressure device 20 shown in the example comprises a mounting plate 203 for fixing in the mounting portion 114 of the top part 11, an arm 200, which by means of a spring 201 can be pretensioned against the singulating disk 19, and a pair of holder arms 205, which are integrated with the arm and on the free end of which is mounted a shaft 204. The shaft 204 can support a pressure wheel 202, which has a plurality of protrusions 206, which, in terms of shape and size, are tailored to be received in the holes 191 in the singulating disk 19 and thus to exert a pressure force on seed received in the holes 191. The pressure wheel 202 can have a generally frustoconical shape, which can be tailored to the construction of the singulating disk 19.

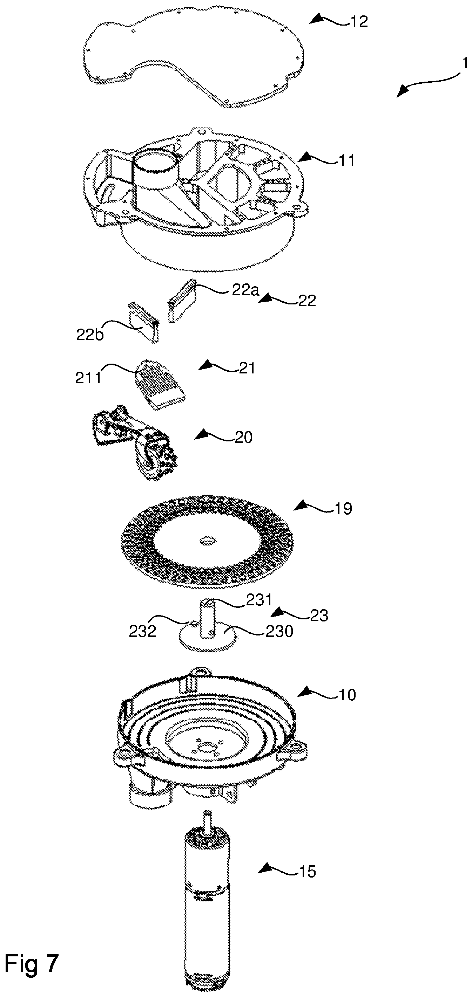

The singulating device 1 can have a material control grid 21 (fig. 7) which can be disposed between the inlet 13 and the pressure device 20. The material control grid 21 can be configured to let through air but not seed, so that seed which is fed to the singulating device 1 via the inlet 13 is guided to the singulating space S, at the same time as the air stream which bears the seed is allowed to pass through the material control grid 21 and onward through the singulating disk 19 to the outlet 14.

The material control grid 21 can be configured as a ramp, which extends over a significant part of, preferably the whole of, the area of the inlet 13. The material control grid 21 can have a, relative to the singulating disk 19, acute angle. The material control grid 21 can have a plurality of through slots 211. The slots 211 can extend substantially tangentially relative to the singulating disk 19.

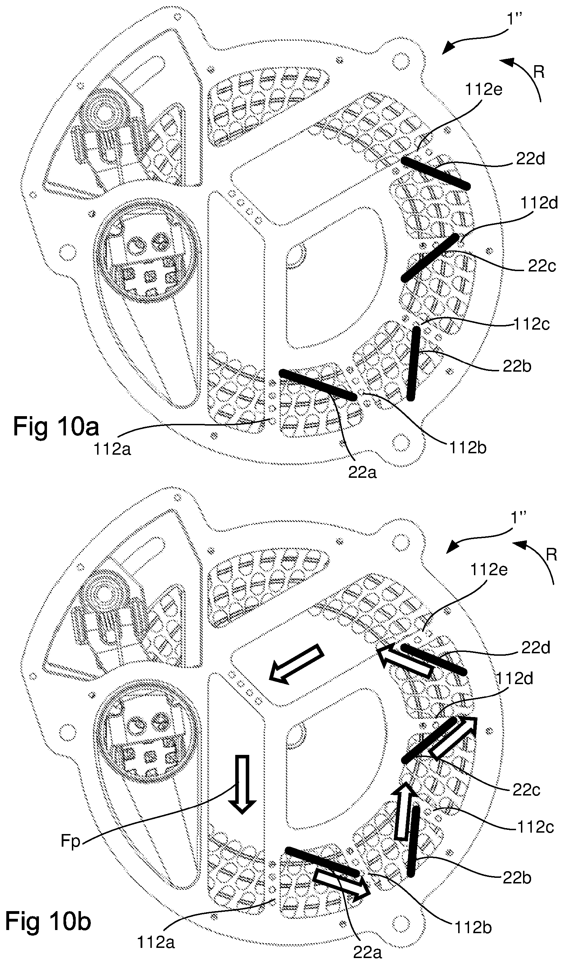

In figs. 10a and 10b is shown an embodiment of a singulating device 1' in which baffles 22a, 22b, 22c, 22d have been mounted on the beam portions 112a, 112b, 112c, 112d, 112e, 112f, 112g in order to, when the singulating disk 19 rotates R, radially displace seed transported on top of the singulating disk 19 and thus improve the distribution of seed over the singulating disk 19 and increase the chance of seed being received in all the holes 191.

For example, a baffle 22a, 22b, 22c, 22d can be configured to, in the same way has been described above with respect to the partition walls 113a, 113b, 113c, 113d, only allow seed which is located in holes 191 in the singulating disk 19 to pass under the baffle.

As is shown in fig. 10b, the baffle 22a which is disposed furthest upstream displaces the seed outward when the singulating disk 19 rotates R; the next baffle 22b, viewed in the direction of rotation R, displaces the seed inward; the following baffle 22c displaces it again outward and the last baffle 22d displaces the seed inward.

The second and fourth baffles 22b, 22d can extend substantially all the way from the side wall 101, 111 and obliquely inward.

As is also shown in fig. 10b, the partition walls 113c, 113d prevent loose seed from reaching the outlet 14.

Fig. 11a shows a first alternative embodiment of a singulating disk 19', in which one of the holes 192 is larger than the other holes 191. In this embodiment, it is two radially adjacent holes which have been joined to form a hole, which thus has fully 200 % of the cross-sectional area compared with the other holes 191.

Fig. 11b shows a second alternative embodiment of a singulating disk 19", in which one of the holes 192' is larger than the other holes 191. In this embodiment, it is two holes which are adjacent to each other in the direction of rotation R which have been joined to form a hole, which thus has fully 200 % of the cross-sectional area compared with the other holes.

Fig. 11c shows a third alternative embodiment of a singulating disk 19"', in which that side of the singulating disk 19‴ which is facing toward the singulating space S has a plurality of protrusions 195, which are situated on material portions situated between the holes 191. The protrusions 195 can have a cross-sectional area which narrows in the direction of the singulating space S. For example, they can be shaped as cones, pyramids or partial spheres. The protrusions reduce the risk of granules remaining lying between the holes 191. It will be appreciated that the protrusions can be connected by ridges or the like in order to further reduce the presence of flat surfaces on which granules can remain lying without being guided down into the holes 191.

It will be appreciated that the singulating disk can have a plurality of enlarged holes 192', 192" as illustrated in fig. 11a and/or as illustrated in fig. 11b, and a plurality of protrusions or elevations as illustrated in fig. 11c.

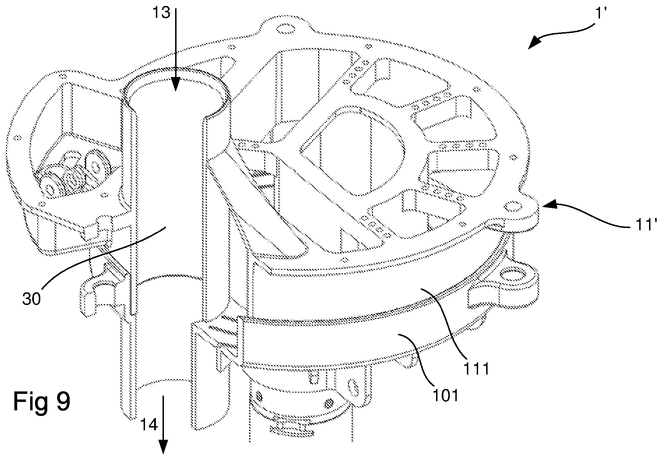

In fig. 9 is shown how a bypass duct 30 has been arranged in order to bypass the singulating device 1'. The bypass duct 30 can be configured as a separate part, which is fitted following removal of the singulating disk 19 and any pressure device 20, or, as shown in fig. 9, as an integrated part of a separate top part 11'. As a result of the bypass duct 30, seed is prevented from entering the singulating space S, and is instead conducted directly to the outlet 14. This can be advantageous when the agricultural implement is used to sow crops which are not suitable for singulation, such as oats.

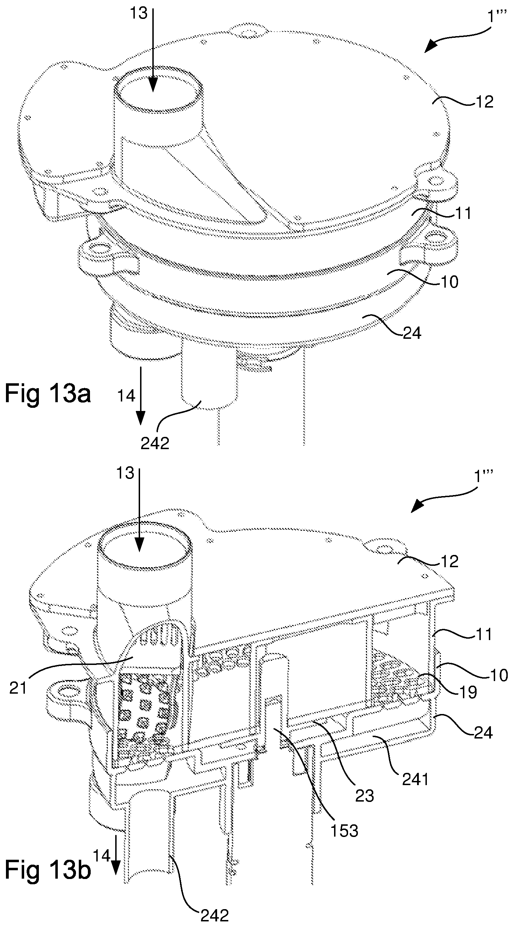

Figs. 13a-13c show an embodiment in which the singulating device 1‴ has been provided with an air collector part 24. The air collector part 24 collects the air which has passed through the slots 103a, 103b, 103c in the base surface 102 of the bottom part 10 into a collector space 241 and conducts the air to a collector outlet 242.

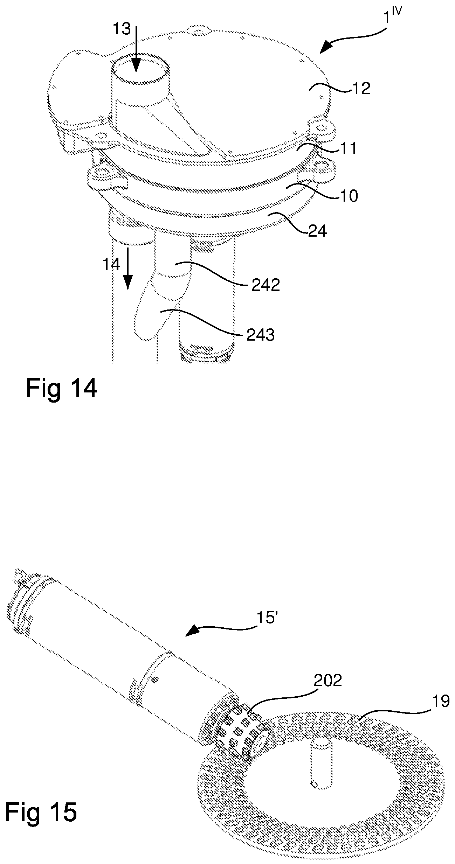

In fig. 14 is shown an embodiment in which a return duct 243 connects the collector outlet 242 to the outlet 14 from the singulating device 1^{IV}, wherein a "closed" system is produced, in which all, or substantially all, of the air is conducted down to the coulter 7.

In the above, embodiments have been shown in which the drive unit drives the singulating disk 19 into rotation, wherein a pressure wheel 202, through its engagement with the singulating disk 19, is made to rotate.

In fig. 15 is shown an alternative embodiment, in which the drive unit 15' has been arranged to drive a pressure wheel 202, wherein the pressure wheel, through its engagement with the singulating disk 19, drives this same.

It will be appreciated that the embodiments in figs. 1-14 and fig. 15 can be combined, i.e. driving of both singulating disk 19 and pressure wheel 202 can occur.

It will be appreciated that the pressure device 20 can be variously configured. In the shown example, a spring-loaded arm having a pressure wheel which is mounted relative to the arm and which has protrusions engaging with the holes in the singulating disk 19 is thus utilized.

According to a first alternative, the pressure wheel 202 can have a substantially smooth periphery.

The periphery of the pressure wheel 202 can be sufficiently soft to be compressed when it is pressed against the surface of the singulating disk, so that parts of the periphery of the pressure wheel bulge into the holes 191 in the singulating disk 19.

The arm 200 can be flexible and resilient per se, instead of being provided with a separate spring.

Instead of a pressure wheel 202, the arm 200 can achieve rubbing contact with the singulating disk 19. Optionally, that part of the arm 200 which bears against the singulating disk 19 can have protrusions (not shown), which jut down into the holes 191 without substantially engaging and without preventing relative motion between the arm 200 and the singulating disk 19.

The singulating disk 19 can be formed of material which is sufficiently flexible to allow the singulating disk to bow toward the outlet 14 at the portion which is subjected to load by the pressure device 20.

As an alternative or supplementary thereto, the singulating disk 19 can be sufficiently flexible to allow material portions situated between the holes 191, 192, 192' to flex in order to facilitate the release of seed received in the holes 191, 192, 192'.

A flexible singulating disk 19 of this kind can be formed, for example, of rubber or rubber-like material.

The bottom part 10 and the top part 11 can be configured so as to be able to be easily decoupled and thus allow the singulating disk 19 to be accessed for inspection or replacement. The fastening lugs 104a, 104b, 104c; 116a, 116b, 116c shown in the example can thus be replaced by a rapid-action coupling.

The drive unit 15 can be wholly or partially axially retracted in the singulating space S in order to produce a more compact singulating device.

The singulating device 1, 1', 1", 1‴, 1^{IV} is advantageously placed as close as possible to the coulter 7. For example, the outlet 14 of the singulating device 1, 1', 1", 1‴, 1^{IV} can connect directly to the coulter, without intervening pipe or tube.

The singulating device 1, 1', 1" can further be provided with an agitating device.

Such an agitating device can be produced by suitable programming of the drive unit 15, for example such that the motor achieves stepwise driving of the singulating disk 19.

Alternatively, an eccentrically placed weight can be arranged adjacent to the output shaft from the motor, in the transmission 152, on the drive shaft 153, on the drive hub 23, or on the shaft 231.

Where the agitating device is utilized, the singulating device can expediently be mounted relative to the agricultural implement via a resilient means and/or a shock-absorbing device, for example in the form of one or more rubber bushings.

The description will now focus on the working of the singulating device 1.

Prior to operation, the singulating device 1, 1', 1" is provided with a singulating disk 19, the hole size and/or hole shape of which is matched to the desired type of seed. In the central control unit of the agricultural implement, the desired quantity of seed per unit of area, or unit of length, and the type of seed, is inputted or chosen. Alternatively, the type of disk can be chosen directly in the central control unit, wherein preprogrammed values for number of holes, etc., are fetched.

During travel, the desired rotation speed for the singulating disk is calculated on the basis of the desired quantity of seed, the type of seed, the configuration of the singulating disk, and the particular speed of advance.

As has been stated in the introduction, a first flow of seed-laden air from the primary distributor is produced. This first flow is conducted, via tubes or pipes, for example, to a plurality of singulating devices 1, 1', 1", 1‴, 1^{IV}, as described above. The outlet 14 of each singulating device is connected to a respective coulter 7.

The singulating device 1, 1', 1", 1‴, 1^{IV} is driven, as described above, such that the singulating disk 19 is made to rotate 1001 about a substantially vertical axis.

The first flow is fed in through the inlet 13, wherein air, but not seed, is allowed to pass straight through the material control grid 21 and onward to the outlet 14. The seed, on the other hand, is guided by the material control grid 21 toward that part of the singulating space S which, viewed in the direction of rotation R, lies furthest away from the outlet 14. In the singulating space S, the seed is allowed, possibly with the assistance of baffles 22a, 22b, 22c, 22d and/or agitation, to drop down into the bottom holes which are formed by the holes 191 in the singulating disk 19 and the base surface 102 of the bottom part 10. The seed which has been received in the holes 191 is guided, by means of the rotation R of the singulating disk, through the singulating space S, past the partition walls 113c, 113d and up to the outlet 14, where a hole 106 aligned with the outlet 14 enables the seed to pass through the singulating disk 19 to the outlet 14, where it is guided, by means of the air which has passed through the material control grid, onward to the coulter. The passage of the seed through the singulating disk is possibly assisted by the pressure device 20, which also helps to clean the holes 191 of the singulating disk 19.

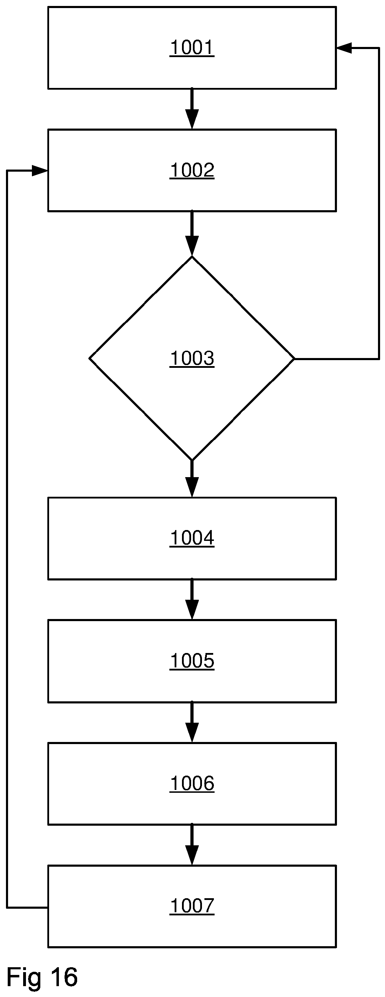

With reference to fig. 16, the singulating device 1, 1', 1", 1‴, 1^{IV} can be configured such that it autonomously deals with minor malfunctions, for example of the kind which mean that the rotation of the singulating disk 19 is wholly or partially prevented.

That the rotation of the singulating disk 19 is prevented can be detected, by way of example, by measurement 1002 of the current to the motor 150. Alternatively, a sensor (photo sensor) is utilized to register the rotation speed of the singulating disk, or an outlet sensor 402 which registers outgoing seed can register a variance in the feed-out rate.

In the examination 1003 of the read result, it is determined whether operation shall continue (i.e. the read result indicates no malfunction) or whether a malfunction exists.

If a malfunction exists, the rotation of the singulating disk 19 is stopped 1004. After this, the singulating disk 19 is driven 1005 at high, and preferably maximum available, power in a reverse direction - R, for a period corresponding to less than 1 revolution, preferably less than 0.5 of a revolution, less than 0.25 of a revolution, less than 0.1 of a revolution, or less than 0.01 of a revolution. Expressed in operating time, the driving in the reverse direction is carried out for about 0.01-0.2 seconds.

The singulating disk is thereafter driven 1006 again at high, and preferably maximum available, power in the forward direction R, for a period corresponding to 1-10 times the driving in the reverse direction -R, preferably 1-5 times, 1-3 times, or 1-2 times.

After this, the operation 1007 can, but does not have to be stopped for new detection 1002 of whether a malfunction exists. Alternatively, the detection 1002 takes place during the driving 1006 forward, wherein normal driving forward is assumed if no fault is detected. The procedure 1002-1007 can be repeated for a predetermined number of times before a fault signal is generated to the user or to the central control unit.

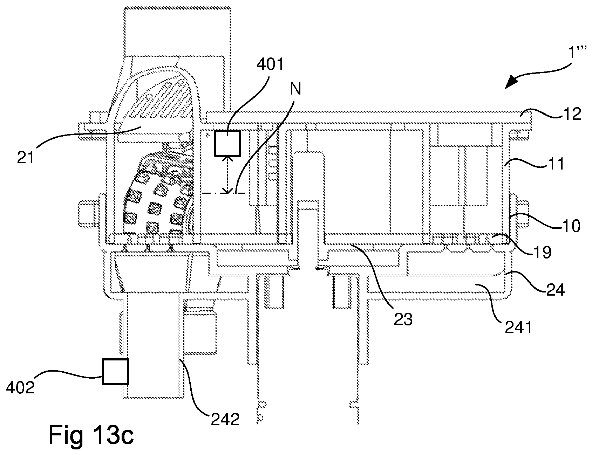

In the singulating space S can be arranged a level sensor 401 (fig. 13c) for seed, wherein the feed rate of the primary distributor and/or the rotation speed of the singulating disk 19 can be controlled at least also on the basis of a value from the level sensor, with a view to maintaining a predetermined seed level N in the singulating space S. The level sensor can utilize, for example, sound or light to measuring the current level in the singulating space S.

At the outlet 14 can be arranged an output sensor 402 (fig. 13c) for outgoing seed, so that the feed-out rate from the singulating device 1 can be monitored and the operation of the singulating device controlled in order to achieve a predetermined feed-out rate. The outlet sensor 402 can be realized in the form of a seed counter of the sort which is available on the market.

The outlet sensor can be disposed in or downstream of the outlet 14, i.e. it can constitute a part of the singulating device, a part of a share, or a part of line situated therebetween.

It will be appreciated that the signal from the outlet sensor 402 can be deemed to be the value which best represents the working of the singulating device, since the signal from the outlet sensor, together with the speed of advance of the agricultural implement, constitutes the resulting distribution of the seed, at least as long as no fault is present downstream of the outlet sensor 402.

The agricultural implement can therefore be controlled such that the rotation speed of the singulating disk is regulated on the basis of the signal from the outlet sensor 402 in order to produce the correct quantity of fed-out seed, wherein the feed rate of a possible primary distributor is regulated on the basis of a signal from the level sensor 401. Optionally, a fault signal can be generated when the value from the level meter 401 falls below a certain value, which can indicate that the speed of advance is too high.

The sensors 401, 402 can be connected up to the central control unit of the agricultural implement.

In the shown embodiments, the singulating disk is constituted by a flat, circular disk having a plurality of through holes. It will be appreciated that a singulating device could be realized by means of a, for example, rectangular singulating disk, which is made to execute a forward and reverse oscillating motion.

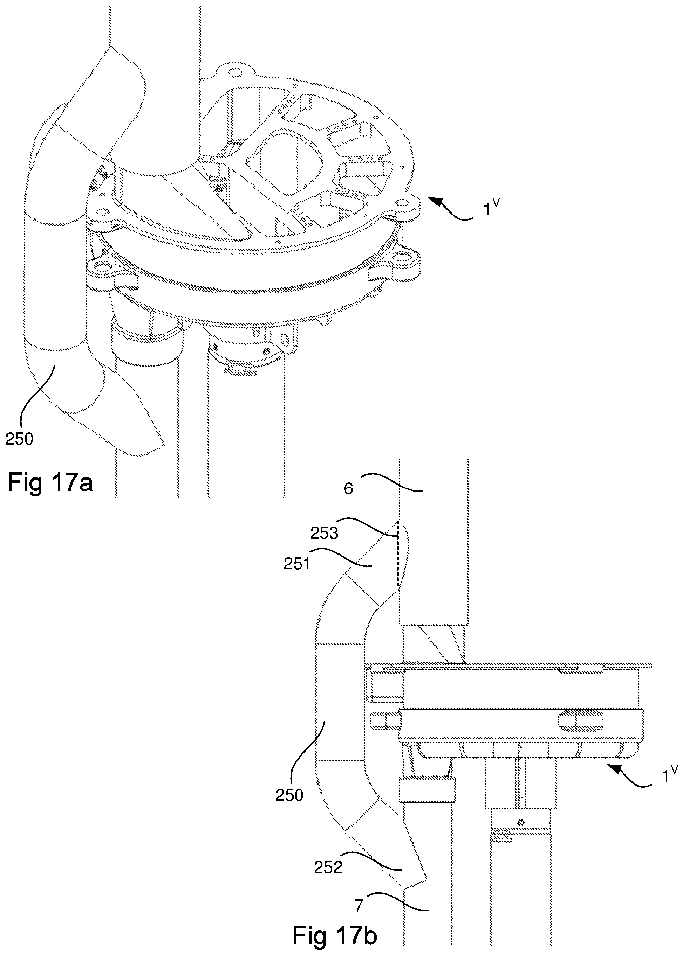

Figs. 17a-17b show a variant of the singulating device 1^{V}, in which this has been provided with a bypass duct 250. The bypass duct 250 comprises a connection 251 to the incoming duct 6 of the singulating device 1^{V} for material-laden air flow and a connection 252 to the outgoing duct of the singulating device 1^{V} for material-laden air flow. The outgoing duct can be the coulter 7. The bypass duct 205 produces a path for the air to pass the singulating device without going through this. Preferably, some of the air in this case passes from the material-laden air flow through the singulating device, while some goes through the bypass duct 250.

In order to ensure that all the material from the material-laden air flow goes through the singulating device, the connection 251 to the incoming duct 6 can be provided with a separator 253, which allows air but not material to pass into the bypass duct 250. The separator 253 can be configured as a disk or tubular part having longitudinal (viewed in the direction of flow of the duct 6) gaps, the width of which is less than a smallest dimension of the material which is fed into the duct 6.

It will be appreciated that the bypass duct 250 can be provided with a valve for adjusting or controlling (for example via the central control unit) a bypass-routed quantity of air.

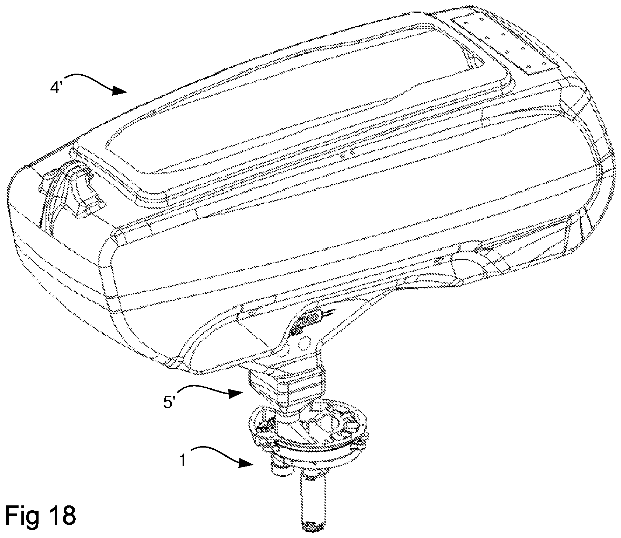

Fig. 18 shows an alternative use of the singulating device 1, 1', 1", 1‴, 1^{IV}, 1^{V}, in which this has been connected up to a seed box 4' associated with the singulating device, so that the seed box and the singulating device 1, 1', 1", 1 "', 1^{IV}, 1^{V} together form a row unit for feeding granules to a row.

The feed from the seed box 4' to the singulating device 1, 1', 1", 1‴, 1^{IV}, 1^{V} can be wholly based on gravity, i.e. the granules drop, via the bottom of the funnel-shaped seed box, down to the singulating device 1, 1', 1", 1‴, 1^{IV}, 1^{V}, wherein the singulating device controls the quantity of granules fed out to the share (not shown in fig. 18). By providing a feed pipe which (possibly adjustably) opens out at a given height above the singulating disk 19, it can be ensured that a desired level of granules is always present in the singulating space S.

In this embodiment, the feed-out from the singulating device 1, 1', 1", 1‴, 1^{IV}, 1^{V} can be realized wholly on the basis of gravity. Alternatively, an air flow can be supplied before or after the singulating device 1, 1', 1", 1‴, 1^{IV}, 1^{V}.

Between the seed box 4' and the singulating device 1, 1', 1", 1‴, 1^{IV}, 1^{V}, a primary distributor 5'can, but does not have to be provided. This can be configured to feed granules from the seed box 4' by means of a screw or a feed wheel, and thus help to ensure that a desired level of granules is always present in the singulating space S.

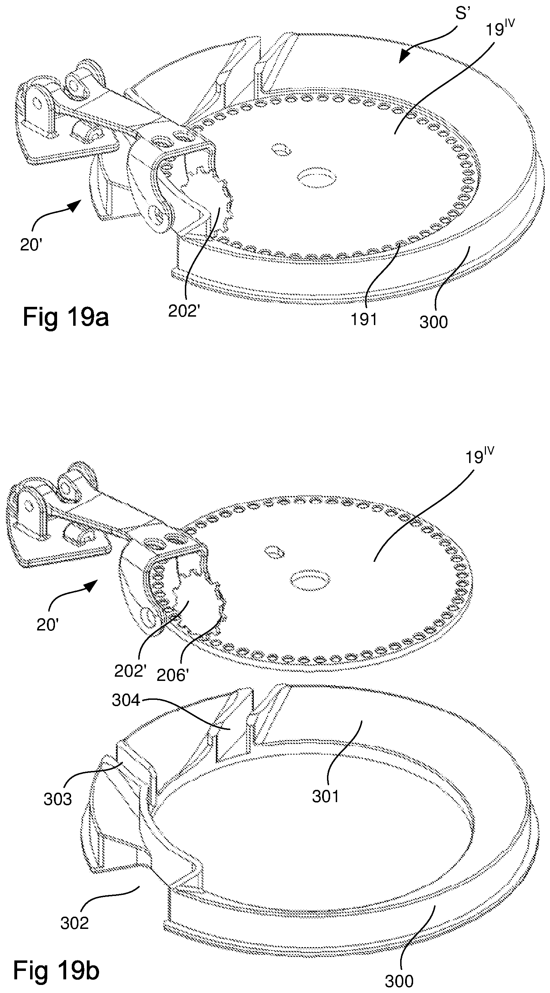

In figs. 19a-19b is shown a singulating disk 19^{IV}, which is especially suitable when small granules or small quantities of granules are to be singulated.

The singulating disk 19^{IV} shown in figs. 19a-19b has only one row of through holes 191, but can naturally be configured with more rows of holes and more densely or more sparsely arranged holes. In addition, other variants with reference to figs. 11a-11c, can also be combined with this singulating disk 19^{IV}.

The singulating disk shown in figs. 19a-19b can be used together with an adaptation insert 300, the function of which is partly to achieve an internal partial bypassing of the singulating disk for the air flow. The material control grid 21 ensures, in the same way as has been shown above, that all the material which is fed to the singulating device ends up in the singulating space S'.

The bypass is achieved by a radial indent 302 in the generally annular adaptation insert 300. The indent 302 is situated at a position corresponding to the inlets 13 and 14 of the singulating device and can have an extent in the circumferential direction which substantially corresponds to the extents of the inlet 13 and of the outlet 14.

The adaptation insert 300 can have a ramp surface 301, which controls the granules as they drop down toward the singulating disk 19^{IV}. The ramp surface 301 can substantially have the shape of an annular conical surface with slope inward toward the singulating disk 19^{IV}.

Furthermore, the adaptation insert can have recesses 303, 304 in the ramp surface in order to receive partition walls 113a, 113b, 113c, 113d of the top part 11. The recesses 303, 304 can extend in directions of the kind which are demanded in consideration of the extent and placement of the partition walls 113a, 113b, 113c.

Like other shown variants, the singulating disk 19^{IV} can be used together with a pressure device 20', which can be modified by comparison with previously described pressure devices 20. The pressure device shown in figs. 19a and 19b comprises a substantially disk-shaped wheel 202', which has a plurality of radially outward extending protrusions 206'. The wheel 202' can be suspended from one of the arms 205 of the previously shown pressure device 20.

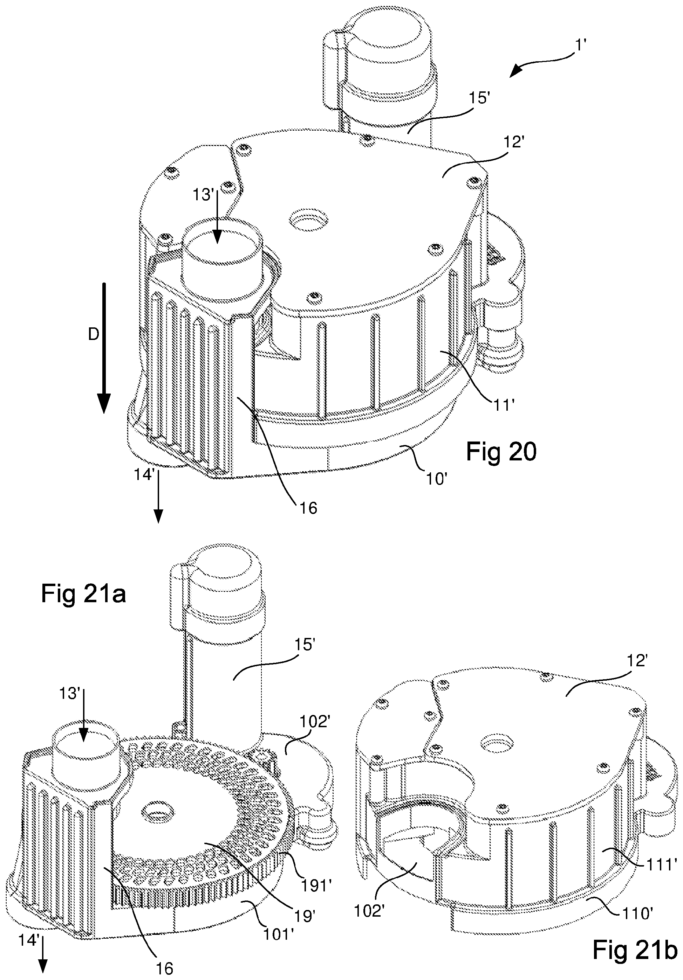

The description will now, with reference to figs. 20-25, focus on a further embodiment of a singulating device. The singulating device 1' which is shown in this embodiment allows a singulating disk 19' to be exchanged without the need to dismantle tubes or pipes connected to the inlet 13' and outlet 14'.

In fig. 20, the singulating device 1' is shown in the mounted state. The singulating device has a bottom part 10', a top part 11', a top cover 12', an inlet 13', an outlet 14', and a drive unit 15'.

The bottom part 10' has a vertical wall 16, which connects the inlet 13' to the outlet 14', such that the inlet and the outlet form a unit with the bottom part 11'.

In figs. 21a and 21b, the singulating device is shown in the open state, in which the top part 11' and the top cover 12' (which here are configured as separate parts which have been joined together by means of screw joints) are lifted off such that the singulating disk 19' has been exposed.

The bottom part 10' comprises a base plate 101', the vertical wall 16, and a mounting portion 102' for the drive unit 15'. The bottom part 10' can wholly or partially lack edges surrounding the singulating disk 19', such that the edge portion of the singulating disk 19' is exposed over at least parts of its circumference. Preferably, the edge portion of the singulating disk 19' can be exposed over more than half of its circumference, more than 75 % of its circumference, or more than 80 % of its circumference. Furthermore, the singulating disk 19', over at least parts of its circumference, can extend radially beyond the base plate 101'.

The vertical wall 16 produces a material bridge between the base plate 101' and the inlet 13'. The vertical wall 16 can thus be dimensioned to absorb the forces which, for example, the seed line (not shown) produces on the inlet 13'.

The inlet 13' and the vertical wall 16 can be formed in one material piece. This material piece can in turn be formed in one piece with the base plate 101'. Alternatively, the inlet 13' and the vertical wall 16 can constitute an integrated unit, which can be detachably fixable relative to the base plate 101', so that the inlet 13' and the vertical wall 16 are exchangeable, for example in order to achieve a bypass of the singulating device 1'.

The outlet 14' too can be formed in the material piece which constitutes the inlet 13' and the vertical wall 101'. The outlet 14', the inlet 13' and also the vertical wall 16 can be exchangeable relative to the base plate 101'. Alternatively, the outlet 14' can be formed in one piece with the base plate 101'.

The outlet 14' can be configured to reduce the risk of the material bouncing against the walls of the outlet before it has had time to be accelerated by the air flow. For example, the outlet 14' can have a shape which follows the motion vector or trajectory exhibited by material which leaves the singulating disk 19'. The motion vector is determined by the gravitational force and by the tangential velocity which the material has when it leaves the singulating disk.

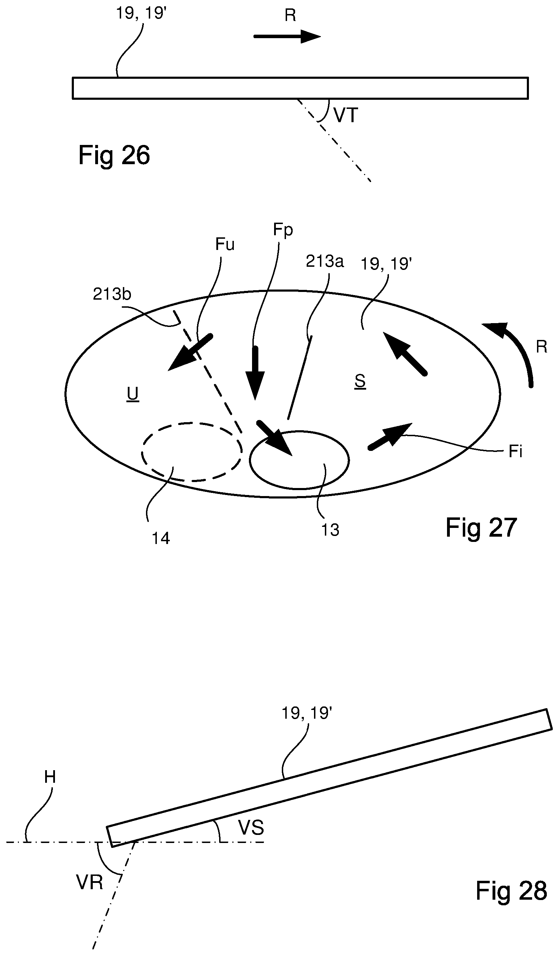

If the singulating disk is angled relative to the horizontal plane (see fig. 28), the motion vector can also comprise a component in the radial direction, viewed from the plane of the singulating disk.

The outlet 14' can comprise a pipe portion 242', which, for example, can be cylindrical, curved or frustroconical, and which, directly adjacent to the underside of the singulating disk, has a center axis A extending at an angle VT which is less than 90° relative to the plane of the singulating disk. The pipe portion 242' can be configured such that the center axis A has an angle relative to the plane of the singulating disk which is such that the projection of the center axis onto the singulating disk has a component greater than zero in a tangential direction forward in the direction of rotation and/or a component greater than zero in a radial direction outward.

The size of the components can be chosen on the basis of the rotation speed at which the singulating disk 19' shall operate, and on the basis of the inclination of the singulating disk relative to a horizontal plane, so that the sizes of the components are proportional to the rotation speed and inclination respectively. This reduces the risk of the granules bouncing against the pipe walls 242' and thus being decelerated, resulting in worsened precision in the feed-out.

The angle VT (fig. 26) viewed in a plane parallel with the tangent and perpendicular to the singulating disk, at a point where the seed separates from the singulating disk, and thus the size of the tangential component, can be determined on the basis of intended rotation speed. It will be appreciated that the higher is the rotation speed, the smaller is the angle VT which is desirable.

The angle VR (fig. 28) viewed in a plane parallel with the radius and perpendicular to the singulating disk, at a point where the seed separates from the singulating disk, and thus the size of the radial component, can be determined on the basis of intended inclination of the singulating disk relative to the horizontal plane H, and on the basis of the possible velocity component which the seed can have when it leaves the singulating disk. It will be appreciated that the greater is the inclination VS, the smaller is the angle VR which is desirable.

The singulating disk 19' can have a member, situated along its periphery, for engagement with the drive mechanism. For example, the periphery of the singulating disk can be provided with cogs 191' or a belt groove (not shown) in order to be driven by a gearwheel 151' or a drive belt (not shown) respectively.

As in an earlier version, the top part 11' can have side walls 111', which, together with the singulating disk 19' and the top cover 12', define the singulating space S.

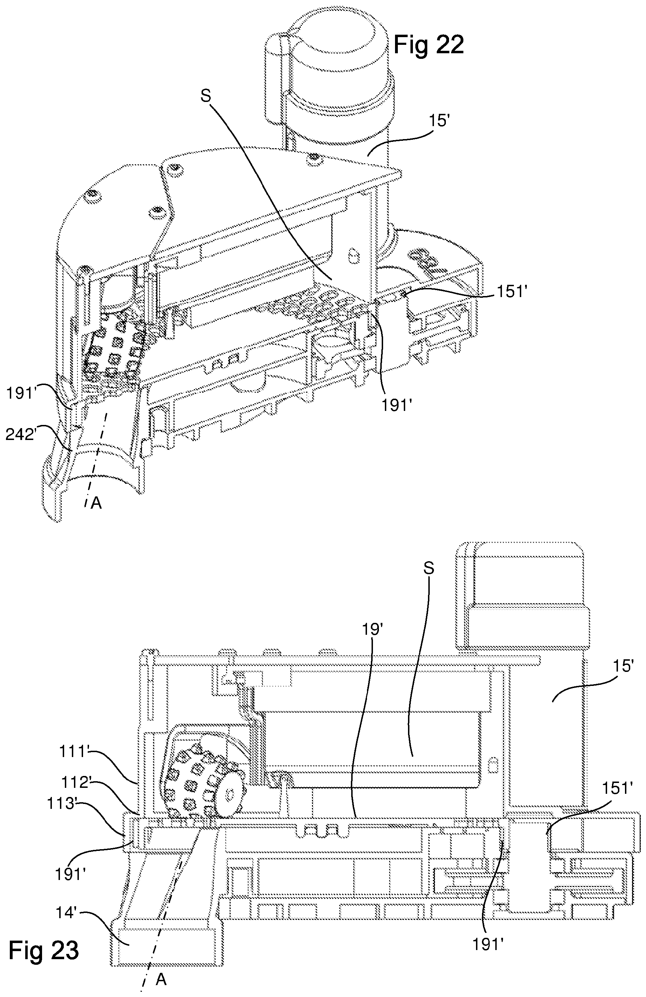

With reference to fig. 23, on a lower portion of the side walls 111' is found a transition portion 112', which extends radially outward, and a marginal portion 113', which extends downward from the transition portion and which at least partially surrounds the singulating disk 19', viewed in the radial direction.

The transition portion 112' can have an inward facing surface, which is substantially parallel with that side of the singulating disk that is facing toward the singulating space and which can seal against the singulating disk 19', so that material which is present in the singulating space S is detained therein. The margin 113' can extend over at least the entire height of the engagement member 191', which reduces the risk of foreign objects interfering with, or damaging, the engagement member 191'.

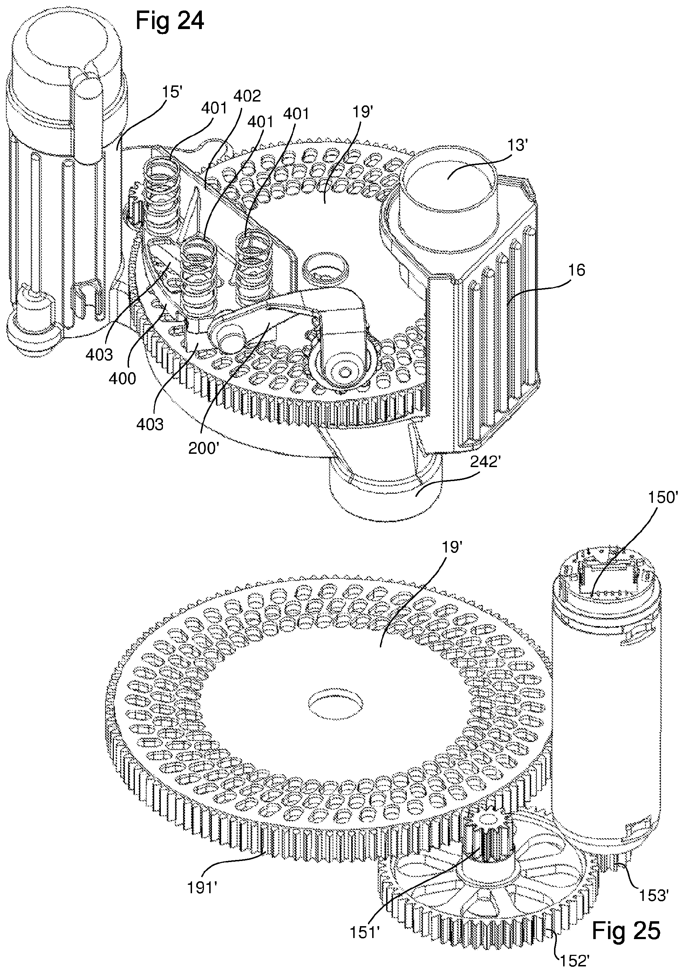

In fig. 24 is shown an alternative arrangement for the control and feed-out of granules. A subframe 400 is suspended via springs 401 relative to the top part (not shown in fig. 24). The springs 400 can adjoin, for example, one or more of the partition walls 113a, 113b, 113c, 113d. The subframe 400 supports one or more scrapers 403, which have the task of ensuring that only granules situated in the holes reach the outlet.

The scrapers 403 can be resilient in order to allow granules which are in holes but jut up above the surface of the singulating disk to be able to pass a scraper, but not granules which are on top of the surface of the singulating disk. For example, the scrapers 403 can be formed of an elastic material, such as rubber or rubber-like material, or of bristles. Alternatively, the scrapers can be formed of a relatively rigid material, but be suspended relative to the subframe via a resilient part.

The subframe 400 can also support one or more partitions 402, the task of which is to divide the singulating space S, for example to form a space in which the granules are found in quantity on top of the singulating disk 19' and a space in which only granules received in holes are found.

In addition, the subframe 400 can support the whole or parts 200' of the pressure device. The pressure device can therefore be fixed in the subframe 400 via a joint, such that the pressure device is movable in at least the vertical direction and is preferably pretensioned in the direction of the singulating disk 19'.

It will be appreciated that the scrapers 403, precisely like the abovementioned baffles, can be configured in the same way, and fixed directly in the top part 11', alternatively in a subframe.

In fig. 25 is shown a drive mechanism, comprising a motor 150', the output shaft of which has a gearwheel 153' which engages with a gearwheel 152' of larger diameter. The gearwheel 152' has a smaller gearwheel 151' connected thereto, which in turn engages with cogs 191' situated on the periphery of the singulating disk.

It will be appreciated that corresponding arrangements can be realized by means of one or more belts, a friction contact, or combinations of two or three of cogs, friction contacts and drive belts.

It will be appreciated that a singulating device with integrated inlet and outlet according to figs. 20-25 can have a drive mechanism as illustrated with reference to any one of the preceding figures.

In figs. 27 and 28 is shown in schematic representation a singulating disk 19, 19', which is inclined relative to the horizontal plane H. An angle of inclination VS can be 5°-40°, preferably 10°-35°, 15°-30° or about 20°-25°. A singulator in which the singulating disk is arranged at an angle can be configured like the singulators as described above. It can be advantageous, but not necessary, to angle the outlet, such as has been described with reference to figs. 22, 23 and 26.

In the case of an inclined singulating disk, the inlet 13 (fig. 27) can be disposed at the lowest point of the singulating disk, or directly after this, viewed in the direction of rotation R. The inlet 13 can be disposed at the lowest point of the singulating disk +/- 30°, preferably +/- 15°. An "uphill slope" for the material is thereby produced, which helps to reduce the risk of material which has not been received in the holes of the singulating disk being carried onward toward the outlet 14.

The outlet 14 can be placed about 0°-90° upstream of the inlet, viewed in the direction of rotation R, and preferably at a lower vertical level than the center of the singulating disk.

As has been shown with reference to fig. 10b and also in fig. 27, the material in the singulator moves from the inlet, in a first flow Fi, past a first partition 213a, which extends from the inlet 13 and upward to a higher vertical level than the center of the singulating disk, but leaves a passage between the lateral end of the partition 213a and the singulator wall. The passage can have a radial width corresponding to the radial width over which the holes of the singulating disk are distributed. The partition 213a can have a sufficient extent in the direction perpendicular to the singulating disk to prevent material from making its way over or under the partition 213a. A seal can be present between the partition and the singulating disk 19, 19a.

After having passed the first partition 213a, that part of the material which has been received in the holes of the singulating disk passes, in a flow Fu, under a second partition 213b, so as subsequently to be fed out through the outlet 14. The material which has not been received in the holes of the singulating disk passes, via a bypass flow Fp, between the partitions 213a, 213b back to the region by the inlet, so as to again be driven with the first flow Fi around the first partition 213a.

The second partition can extend the whole of the way to the singulator wall, so that a feed-out space U is formed on its one side, which space is separate from the singulating space S. The second partition 213b can have a flexible bottom edge, which allows material which has been received in holes of the singulating disk to pass to the outlet 14.

As a result of the inclination of the singulating disk, the movement of the bypass flow Fp toward the inlet will be facilitated, which reduces the risk of too high a material level being built up between the partitions 213a, 213b.

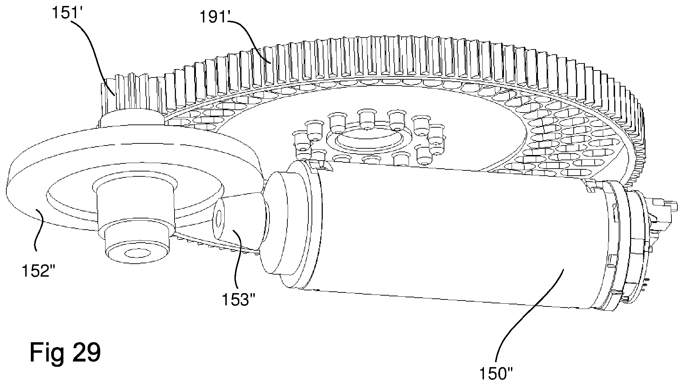

In fig. 29 is shown a configuration of the drive mechanism, in which the motor 150" has been placed with its longitudinal direction (rotational axis) substantially parallel, i.e. parallel +/- 10°, preferably +/- 5°, with the plane of the singulating disk, and in which the parts 152' and 153' have been replaced with a bevel gear 152" and 153" comprising, for example, conical and/or beveled gearwheels or friction couplings, which helps to produce a more compact singulating device. Otherwise, the singulating device can be configured in accordance with that which has been described above.

## Claims

1. An agricultural implement for feeding of granules, such as seed, fertilizer or herbicide, comprising:
a container (4, 4') for said granules; and
a primary distributor (5, 5a, 5b, 5c) connected to the container and set up to feed said granules from the container in order to produce a first flow of granules;
flow-generating means for producing an air flow for driving at least the first flow of granules,
at least two shares (7) for feeding out said granules to the ground, the primary distributor being arranged to feed said granules to the at least two shares,
singulating devices (1, 1', 1", 1‴, 1^{IV}, 1^{V}), connected to a respective share, and arranged to receive the first flows of granules from the container and to feed out a second flow of granules to the respective share,
wherein the singulating devices comprise:
a singulating disk (19, 19', 19", 19"'), which has a plurality of through holes (191),
a housing (10, 11, 12), in which the singulating disk is disposed, the housing comprising an inlet (13) for granule-bearing air, and an outlet (14) for granule-bearing air,
wherein the holes (191) are tailored in terms of shape and size to receive individual granules, and
wherein the shape and size of the holes (191) are such that the granules can only pass one at a time through each hole.

2. The agricultural implement as claimed in claim 1, wherein the inlet (13) and the outlet (14) are situated on opposite sides of the singulating disk and substantially aligned with each other.

3. The agricultural implement as claimed in claim 1, wherein the inlet and the outlet are displaced in relation to each other at an angle amounting to 1° - 45°, viewed from the center of the singulating disk.

4. The agricultural implement as claimed in any one of the preceding claims, wherein the housing has a base portion (102), wherein the singulating disk (19) is placed sufficiently close to the base portion (102) for the holes of the disk, together with the base portion (102), to form bottom holes.

5. The agricultural implement as claimed in claim 4, wherein the base portion (102) has a gap (103a, 103b, 103c) running in the circumferential direction, which radially coincides with at least some of the holes (191) such that air, but not granules, can pass through said bottom holes.

6. The agricultural implement as claimed in any one of the preceding claims, further comprising an air-collecting housing (24), which is configured to collect air which passes through the holes in the singulating disk.

7. The agricultural implement as claimed in claim 6, wherein the air-collecting housing (24) is configured to conduct collected air to the outlet (14) or to a separate duct which opens out closer to the ground than the outlet (14).

8. The agricultural implement as claimed in any one of the preceding claims, further comprising a pressure member (20) set up to press the granules through the holes.

9. The agricultural implement as claimed in any one of the preceding claims, wherein the singulating disk has an angle of inclination (VS) of 5°-40°, preferably 10°-35°, 15°-30° or about 20°-25°, relative to a horizontal plane (H).

10. The agricultural implement as claimed in claim 9, wherein the inlet (13) is situated at a lower vertical level than a center of the singulating disk.

11. A method of singulating granules, such as seed, fertilizer or herbicide, in an agricultural implement, comprising:
providing said granules in a container; and
producing at least two first flows of granules from the container to a respective singulating device by means of a primary distributor connected to the container;
producing an air flow for driving at least said first flows of granules,
each one of at least two singulating devices receiving one of said first flows of granules,
from the respective singulating device feeding a respective second flow of granules to a respective share (7) for feeding out said granules to the ground, the second flows of granules being more even than the first flows,
wherein a singulating disk is made to rotate (1001) relative to a housing of the singulating device, and
and wherein the granules, in the singulating device, are made to pass one at a time through each through hole in the singulating disk.

12. The method as claimed in claim 11, further comprising shifting the singulating disk and only allowing a granule to pass through a respective hole when the singulating disk, and thus the hole, are at a predetermined position.

13. The method as claimed in any one of claims 11 or 12, further comprising rotating the singulating disk sufficiently close to a base portion of a housing such that the holes, together with the bottom part, form bottom holes, each one of which is configured to receive a granule.

14. The method as claimed in any one of claims 11-13, wherein air contained in the first flow is allowed to pass through the singulating disk in order to be incorporated in the second flow.

## Patentansprüche

1. Landwirtschaftliches Arbeitsgerät zum Zuführen von Körnchen, wie Saatgut, Düngemittel oder Herbizid, umfassend:
einen Behälter (4, 4') für die Körnchen; und
einen primären Verteiler (5, 5a, 5b, 5c), der mit dem Behälter verbunden und dazu eingerichtet ist, die Körnchen aus dem Behälter zuzuführen, um einen ersten Körnchenstrom zu erzeugen;
Strömungserzeugungsmittel zum Erzeugen eines Luftstroms zum Antreiben mindestens des ersten Körnchenstroms,
mindestens zwei Scharen (7) zum Zuführen der Körnchen zum Boden, wobei der primäre Verteiler dazu angeordnet ist, die Körnchen den mindestens zwei Scharen zuzuführen,
Vereinzelungsvorrichtungen (1, 1', 1", 1‴, 1^{IV,} 1^{v}), die mit einer jeweiligen Schar verbunden und dazu angeordnet sind, die ersten Körnchenströme aus dem Behälter aufzunehmen und einen zweiten Körnchenstrom der jeweiligen Schar zuzuführen,
wobei die Vereinzelungsvorrichtungen Folgendes umfassen:
eine Vereinzelungsscheibe (19, 19', 19", 19"'), die mehrere Durchgangslöcher (191) aufweist,
ein Gehäuse (10, 11, 12), in dem die Vereinzelungsscheibe angeordnet ist, wobei das Gehäuse einen Einlass (13) für körnchenhaltige Luft und einen Auslass (14) für körnchenhaltige Luft umfasst,
wobei die Löcher (191) bezüglich einer Form und Größe auf die Aufnahme einzelner Körnchen zugeschnitten sind, und
wobei die Form und Größe der Löcher (191) derart sind, dass die Körnchen nur nacheinander durch jedes Loch hindurchgehen können.

2. Landwirtschaftliches Arbeitsgerät nach Anspruch 1, wobei der Einlass (13) und der Auslass (14) auf gegenüberliegenden Seiten der Vereinzelungsscheibe liegen und im Wesentlichen miteinander ausgerichtet sind.

3. Landwirtschaftliches Arbeitsgerät nach Anspruch 1, wobei der Einlass und der Auslass, von der Mitte der Vereinzelungsscheibe aus gesehen, in einem Winkel von 1°-45° in Relation zueinander versetzt sind.

4. Landwirtschaftliches Arbeitsgerät nach einem der vorhergehenden Ansprüche, wobei das Gehäuse einen Basisabschnitt (102) aufweist, wobei die Vereinzelungsscheibe (19) ausreichend nahe an dem Basisabschnitt (102) platziert ist, damit die Löcher der Scheibe zusammen mit dem Basisabschnitt (102) Bodenlöcher bilden.

5. Landwirtschaftliches Arbeitsgerät nach Anspruch 4, wobei der Basisabschnitt (102) einen in Umfangsrichtung verlaufenden Spalt (103a, 103b, 103c) aufweist, der sich radial mit zumindest einigen der Löcher (191) deckt, so dass Luft, aber keine Körnchen, durch die Bodenlöcher hindurchgehen kann.

6. Landwirtschaftliches Arbeitsgerät nach einem der vorhergehenden Ansprüche, ferner umfassend ein Luftsammelgehäuse (24), das dazu ausgelegt ist, Luft zu sammeln, die durch die Löcher in der Vereinzelungsscheibe hindurchgeht.

7. Landwirtschaftliches Arbeitsgerät nach Anspruch 6, wobei das Luftsammelgehäuse (24) dazu ausgelegt ist, gesammelte Luft zum Auslass (14) oder zu einem separaten Kanal zu leiten, der sich näher am Boden als der Auslass (14) öffnet.

8. Landwirtschaftliches Arbeitsgerät nach einem der vorhergehenden Ansprüche, ferner umfassend ein Druckelement (20), das dazu eingerichtet ist, die Körnchen durch die Löcher zu drücken.

9. Landwirtschaftliches Arbeitsgerät nach einem der vorhergehenden Ansprüche, wobei die Vereinzelungsscheibe einen Neigungswinkel (VS) von 5°-40°, vorzugsweise 10°-35°, 15°-30° oder etwa 20°-25°, relativ zu einer horizontalen Ebene (H) aufweist.

10. Landwirtschaftliches Arbeitsgerät nach Anspruch 9, wobei der Einlass (13) auf einer niedrigeren vertikalen Höhe als eine Mitte der Vereinzelungsscheibe liegt.

11. Verfahren zum Vereinzeln von Körnchen, wie Saatgut, Düngemittel oder Herbizid, in einem landwirtschaftlichen Arbeitsgerät, umfassend:
Bereitstellen der Körnchens in einem Behälter; und
Erzeugen von mindestens zwei ersten Körnchenströmen aus dem Behälter zu einer jeweiligen Vereinzelungsvorrichtung mittels eines mit dem Behälter verbundenen primären Verteilers;
Erzeugen eines Luftstroms zum Antreiben zumindest der ersten Körnchenströme,
wobei jede von mindestens zwei Vereinzelungsvorrichtungen einen der ersten Körnchenströme aufnimmt,
aus der jeweiligen Vereinzelungsvorrichtung, Zuführen eines jeweiligen zweiten Körnchenstroms zu einer jeweiligen Schar (7) zum Zuführen der Körnchens zum Boden, wobei die zweiten Körnchenströme gleichmäßiger als die ersten Ströme sind,
wobei eine Vereinzelungsscheibe dazu gebracht wird, sich relativ zu einem Gehäuse der Vereinzelungsvorrichtung zu drehen (1001), und
und wobei die Körnchen in der Vereinzelungsvorrichtung dazu gebracht werden, nacheinander durch jedes Durchgangsloch in der Vereinzelungsscheibe hindurchzugehen.

12. Verfahren nach Anspruch 11, ferner umfassend Verschieben der Vereinzelungsscheibe und nur Zulassen, dass ein Körnchen durch ein jeweiliges Loch hindurchgeht, wenn sich die Vereinzelungsscheibe und somit das Loch an einer vorbestimmten Position befinden.

13. Verfahren nach einem der Ansprüche 11 oder 12, ferner umfassend Drehen der Vereinzelungsscheibe ausreichend nahe an einem Basisabschnitt eines Gehäuses, so dass die Löcher zusammen mit dem Bodenteil Bodenlöcher bilden, von denen jedes dazu ausgelegt ist, ein Körnchen aufzunehmen.

14. Verfahren nach einem der Ansprüche 11-13, wobei zugelassen wird, dass in dem ersten Strom enthaltene Luft durch die Vereinzelungsscheibe hindurchgeht, um in den zweiten Strom eingebracht zu werden.

## Revendications

1. Outil agricole d'alimentation en granules, tels qu'une semence, de l'engrais, ou un herbicide, comprenant :
un réservoir (4, 4') pour lesdits granules ; et
un distributeur primaire (5, 5a, 5b, 5c) raccordé au réservoir et installé pour l'alimentation en lesdits granules depuis le réservoir afin de produire un premier écoulement de granules ;
des moyens de génération d'écoulement destinés à produire un écoulement d'air pour entraîner au moins le premier écoulement de granules,
au moins deux socs (7) pour éjecter desdits granules vers le sol, le distributeur primaire étant agencé pour alimenter, en lesdits granules, au moins deux socs,
des dispositifs d'individualisation (1, 1', 1", 1"', 1^{IV}, 1^{V}), raccordés à un soc respectif, et agencés pour recevoir les premiers écoulements de granules en provenance du réservoir et pour éjecter un second écoulement de granules vers le soc respectif,
dans lequel les dispositifs d'individualisation comprennent :
un disque d'individualisation (19, 19', 19", 19‴), qui a une pluralité de trous de passage (191),
un logement (10, 11, 12), dans lequel le disque d'individualisation est disposé, le logement comprenant une entrée (13) pour de l'air porteur de granules, et une sortie (14) pour de l'air porteur de granules,
dans lequel les trous (191) sont adaptés, quant à la forme et à la taille, pour recevoir des granules individuels, et
dans lequel la forme et la taille des trous (191) sont telles que les granules peuvent seulement passer un à la fois à travers chaque trou.

2. Outil agricole tel que revendiqué dans la revendication 1, dans lequel l'entrée (13) et la sortie (14) sont situées sur des côtés opposés du disque d'individualisation et sensiblement alignées l'une avec l'autre.

3. Outil agricole tel que revendiqué dans la revendication 1, dans lequel l'entrée et la sortie sont déplacées l'une relativement à l'autre à un angle s'élevant à 1° à 45°, en vue depuis le centre du disque d'individualisation.

4. Outil agricole tel que revendiqué dans l'une quelconque des revendications précédentes, dans lequel le logement a une portion de base (102), dans lequel le disque d'individualisation (19) est placé suffisamment près de la portion de base (102) pour que les trous du disque, conjointement avec la portion de base (102), forment des trous inférieurs.

5. Outil agricole tel que revendiqué dans la revendication 4, dans lequel la portion de base (102) a un espace (103a, 103b, 103c) s'étendant dans la direction circonférentielle, qui coïncide radialement avec au moins certains des trous (191) de manière telle que de l'air, et non des granules, peut passer à travers lesdits trous inférieurs.

6. Outil agricole tel que revendiqué dans l'une quelconque des revendications précédentes, comprenant en outre un logement de collecte d'air (24), qui est configuré pour collecter de l'air qui passe à travers les trous dans le disque d'individualisation.

7. Outil agricole tel que revendiqué dans la revendication 6, dans lequel le logement de collecte d'air (24) est configuré pour conduire l'air collecté vers la sortie (14) ou vers une conduite séparée qui s'ouvre plus près du sol que la sortie (14).

8. Outil agricole tel que revendiqué dans l'une quelconque des revendications précédentes, comprenant en outre un élément de pression (20) réglé pour presser les granules à travers les trous.

9. Outil agricole tel que revendiqué dans l'une quelconque des revendications précédentes, dans lequel le disque d'individualisation a un angle d'inclinaison (VS) de 5° à 40°, de préférence de 10° à 35°, de 15° à 30° ou d'environ 20° à 25°, relativement à un plan horizontal (H).

10. Outil agricole tel que revendiqué dans la revendication 9, dans lequel l'entrée (13) est située à un niveau vertical plus bas qu'un centre du disque d'individualisation.

11. Procédé d'individualisation de granules, tels qu'une semence, un engrais, ou un herbicide, dans un outil agricole, comprenant les faits :
de fournir lesdits granules dans un réservoir ; et
de produire au moins deux premiers écoulements de granules, depuis le réservoir jusqu'à un dispositif d'individualisation respectif, au moyen d'un distributeur primaire raccordé au réservoir ;
de produire un écoulement d'air pour entraîner au moins lesdits premiers écoulements de granules,
chacun d'au moins deux dispositifs d'individualisation recevant un desdits premiers écoulements de granules,
depuis le dispositif d'individualisation respectif, d'alimenter, en un second écoulement respectif de granules, un soc respectif (7), pour éjecter lesdits granules vers le sol, les seconds écoulements de granules étant plus uniformes que les premiers écoulements,
dans lequel un disque d'individualisation est amené à tourner (1001) relativement à un logement du dispositif d'individualisation, et
et dans lequel les granules, dans le dispositif d'individualisation, sont amenés à passer un à la fois à travers chaque trou de passage dans le disque d'individualisation.

12. Procédé tel que revendiqué dans la revendication 11, comprenant en outre les faits de déplacer le disque d'individualisation et de seulement permettre à un granule de passer à travers un trou respectif lorsque le disque d'individualisation, et ainsi le trou, sont à une position prédéterminée.

13. Procédé tel que revendiqué dans l'une quelconque des revendications 11 ou 12, comprenant en outre le fait de faire tourner le disque d'individualisation de façon suffisamment proche d'une portion de base d'un logement de manière telle que les trous, conjointement avec la partie inférieure, forment des trous inférieurs, dont chacun est configuré pour recevoir un granule.

14. Procédé tel que revendiqué dans l'une quelconque des revendications 11 à 13, dans lequel de l'air contenu dans le premier écoulement est permis de passer à travers le disque d'individualisation afin d'être incorporé dans le second écoulement.
